Europäisches Patentamt

European Patent Office

Office européen des brevets

(19)

(11) Veröffentlichungsnummer: **0 030 992**
**B1**

(12)

# EUROPÄISCHE PATENTSCHRIFT

(45) Veröffentlichungstag der Patentschrift: **16.11.83**

(51) Int. Cl.³: **F 16 H 9/24, F 16 H 55/30**

(21) Anmeldenummer: **79890072.6**

(22) Anmeldetag: **21.12.79**

(54) Getriebeglied.

(43) Veröffentlichungstag der Anmeldung:
**01.07.81 Patentblatt 81/26**

(45) Bekanntmachung des Hinweises auf die Patenterteilung:
**16.11.83 Patentblatt 83/46**

(84) Benannte Vertragsstaaten:
**FR GB IT SE**

(56) Entgegenhaltungen:
**DE - A - 2 162 074**
**DE - C - 727 593**

(73) Patentinhaber: **Ecker, Johann**
**Karl-Loy-Strasse 3**
**A - 4600 Wels (AT)**

(72) Erfinder: **Ecker, Johann**
**Karl-Loy-Strasse 3**
**A - 4600 Wels (AT)**

(74) Vertreter: **Hübscher, Gerhard, Dipl.-Ing. et al,**
**Patentanwälte Dipl.-Ing. Gerhard Hübscher Dipl.-Ing. Helmut Hübscher Dipl.-Ing. Heiner Hübscher**
**Spittelwiese 7**
**A-4020 Linz (AT)**

Courier Press, Leamington Spa, England.

## Getriebeglied

Die Erfindung bezieht sich auf ein Getriebeglied, bestehend aus einem Scheibenkörper, der mit Hilfe eines Stelltriebes gleichsinnig radial verstellbare Stellkörper trägt, die außen von einem flexiblen Zugmittel umschlossen sind, das eine Zahn- oder Lochreihe zum formschlüssigen Kämmen mit einem Übertragungselement aufweist und mit einem Ende an einem Stellkörper verschiebefest angreift, während das andere Ende durch eine Durchtrittsöffnung unmittelbar vor dem festgehaltenen Ende zu einem von den Stellkörpern umschlossenen Speicher geführt ist, der aus einem gegenüber dem koaxialen Scheibenkörper drehverstellbaren Speicherrad besteht, an dem das Zugmittel verschiebefest angreift.

Um das Übersetzungsverhältnis bei Getrieben in weiten Grenzen verändern zu können, ist es bekannt, zumindest ein Getriebeglied hinsichtlich seines wirksamen Durchmessers verstellbar auszubilden. Solche verstellbare Getriebeglieder können eine Kegelform aufweisen (US—A—1 358 447), wobei der sich in axialer Richtung kontinuierlich verändernde Durchmesser durch ein Verschieben des kegelförmigen Getriebegliedes oder des mit diesem Getriebeglied zusammenwirkenden Übertragungselementes entlang einer Mantelerzeugenden ausgenützt wird. Eine andere Möglichkeit, den wirksamen Umfang eines Getriebegliedes zu verstellen, besteht darin, in radialen Schlitzen eines Scheibenkörpers Stellkörper verschiebbar zu führen, die in die Spiralgänge einer Stellscheibe eingreifen und bei einer Relativdrehung zwischen Stellscheibe und Scheibenkörper radial verschoben werden (US—A—4 068 539). Dabei kommt als Übertragungselement ein Riemen zum Einsatz, was eine kraftschlüssige Verbindung zwischen dem hinsichtlich seines wirksamen Durchmessers verstellbaren Getriebeglied und dem am Umfang des Getriebegliedes angreifenden Übertragungselement erzwingt, so daß mit einem Schlupf und damit mit einem vergleichsweise geringen Wirkungsgrad zu rechnen ist.

Um eine formschlüssige Verbindung zwischen einem bezüglich seines Durchmessers veränderbaren Getriebeglied und einem Übertragungselement sicherstellen zu können, ist es bekannt (DE—C—727 593), die auf einem Scheibenkörper gleichsinnig radial verstellbaren Stellkörper mit einer Laschenkette zu umschließen. Diese Laschenkette ist an einem Ende an einem der Stellkörper befestigt und mit ihrem anderen Ende zu einem von den Stellkörpern umschlossenen Speicher geführt, der ein drehbar gelagertes Speicherrad aufweist, an dem das Zugmittel verschiebefest angreift. Das Speicherrad kann dabei gegen die Kraft einer Feder verdreht werden, so daß bei einer Vergrößerung des Durchmessers des Getriebegliedes die Laschenkette gegen die Kraft der auf das Speicharrad wirkenden Feder aus dem Speicher gezogen werden kann, um der dabei auftretenden Vergrößerung der Umfangslänge des Getriebegliedes Rechnung zu tragen. Bei einer Verkleinerung des Durchmessers des Getriebegliedes wird die Laschenkette auf Grund der Drehmomentbelastung des Speicherrades durch die Feder wieder in den Speicher eingezogen. Da zufolge dieser Ausbildung das hinsichtlich seines Durchmessers verstellbare Getriebeglied an seinem Umfang eine Laschenkette trägt, kann ein formschlüssiger Eingriff eines entsprechend ausgebildeten Übertragungselementes in die Laschenkette sichergestellt werden. Nachteilig bei dieser Konstruktion ist jedoch, daß das Getriebeglied nur in einem Drehsinn höher belastet werden kann, weil im anderen Drehsinn das größte übertragbare Drehmoment von der Größe der Feder des Speichers abhängt. Um für eine Durchmesservergrößerung des Getriebegliedes nicht zu große Kräfte aufbringen zu müssen, sollte diese auf das Speicherrad wirkende Feder vergleichsweise weich ausgebildet sein, was der Übertragung höherer Drehmomente entgegensteht.

Der Erfindung liegt somit die Aufgabe zugrunde, diesen Mangel zu vermeiden und ein Getriebeglied der eingangs geschilderten Art so zu verbessern, daß es in beiden Drehrichtungen gleichermaßen belastet werden kann.

Die Erfindung löst die gestellte Aufgabe dadurch, daß der Speicher mit dem Stelltrieb für die Stellkörper in Antriebsverbindung steht. Durch diese Antriebsverbindung zwischen dem Speicher und dem Stelltrieb für die Stellkörper wird sichergestellt, daß für das Verstellen der Stellkörper im Sinne einer Durchmesservergrößerung keine Kraft zur Überwindung einer Ruckzugfeder aufgebracht werden muß. Außerdem ergibt sich zwischen den Stellkörpern und dem Speicher über die Antriebsverbindung eine Verspannung, die ein ungewolltes Verstellen, beispielsweise des Speichers gegenüber der zugehörigen radialen Lage der Stellkörper, ausschließt, so daß wegen der verschiebefesten Verbindung des Zugmittels mit dem Speicherrad und der Antriebsverbindung zwischen dem Speicherrad und dem Stelltrieb für die Stellkörper eine gleich große Drehmomentbelastung in beiden Drehrichtungen möglich wird.

Werden zwei über den Umfang verteilte, an je einem Speicherrad befestigte Zugmittel vorgesehen, so können die Stellkörper des auf Grund der Drehstellung des Getriebegliedes gerade nicht belasteten Zugmittels für eine Durchmesseränderung verstellt werden, was eine Verstellung im unbelasteten Zustand ermöglicht. Die Antriebsverbindung zwischen dem Stelltrieb für die Stellkörper und den beiden Speicherrädern bleibt dabei selbstverständlich erhalten.

In der Zeichnung ist der Erfindungsgegenstand in einem Ausführungsbeispiel vereinfacht dargestellt. Es zeigen

Fig. 1 ein erfindungsgemäßes Getriebeglied im Axialschnitt,

Fig. 2 des Getriebeglied nach Fig. 1, in Ansicht von vorne und

Fig. 3 eine Anordnung von zwei Zugmitteln im Schema.

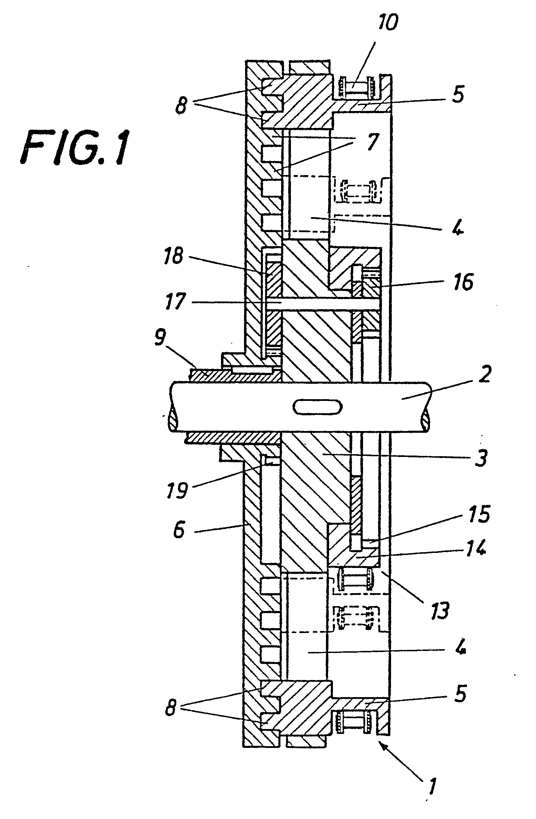

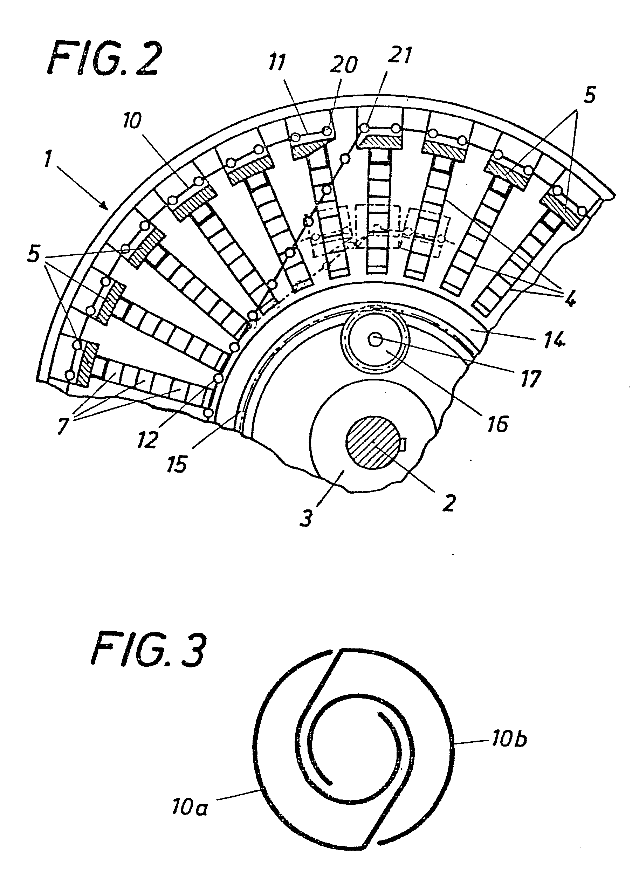

Das in den Fig. 1 und 2 dargestellte Getriebeglied 1 besteht im wesentlichen aus einem auf einer An- oder Abtriebswelle 2 drehfest gelagerten Scheibenkörper 3, der mit radialen Führungsschlitzen 4 für den wirksamen Umfang bildende Stellkörper 5 versehen ist, die mit Hilfe einer Stellscheibe 6 gleichsinnig radial einwärts oder auswärts bewegt werden können, um den wirksamen Durchmesser des Getriebegliedes 1 zur Veränderung des Übersetzungsverhältnisses zu verstellen. Zu diesem Zweck weist die Stellscheibe 6 Spiralgänge 7 auf, in die die Stellkörper 5 mit entsprechenden Gegengängen 8 eingreifen, so daß auf Grund der Steigung der Spiralgänge 7 die Stellkörper 5 bei einer Relativdrehung der Stellscheibe 6 gegenüber dem Scheibenkörper in radialer Richtung verstellt werden. Um eine Drehverstellung der Stellscheibe 6 gegenüber dem Scheibenkörper 3 zu ermöglichen, ist auf der An- bzw. Abtriebswelle 2 eine Hohlwelle 9 drehbar gelagert, auf der die Stellscheibe drehfest sitzt.

Damit zwischen dem dargestellten Getriebeglied 1 und einem nicht näher dargestellten Übertragungselement, das als Gegenrad oder als endloser Riemen oder Kettenzug ausgebildet sein kann, eine schlupffreie Verbindung hergestellt werden kann, werden die Stellkörper 5 von einem als Laschenkette ausgebildeten Zugmittel 10 umschlossen, das mit seinem einen Ende 11 an einem Stellkörper 5 verschiebefest befestigt ist. Das andere Ende 12 des Zugmittels 10 ist zwischen dem Stellkörper 5, der das Ende 11 des Zugmittels festhält und dem benachbarten Stellkörper hindurch zu einem Speicher 13 geführt, der aus einem auf der Nabe des Scheibenkörpers 3 gelagerten Speicherrad 14 besteht. Dieses Speicherrad 14 besitzt einen Innenzahnkranz 15, in den ein Ritzel 16 eingreift, das über eine im Scheibenkörper 3 gelagerte Welle 17 mit einem Zahnrad 18 verbunden ist, das mit einem Zahnkranz 19 der Stellscheibe 6 kämmt. Wird demnach der Durchmesser des Getriebegliedes 1 über die Stellscheibe 6 verändert, so wird mit der Stellscheibe 6 das Zahnrad 18 mitgedreht, was über das Ritzel 16 und den Zahnkranz 15 eine Drehverstellung des Speicherrades 14 zur Folge hat, so daß entsprechend der Durchmesseränderung das auf dem Speicherrad 14 aufgewickelte Zugmittel 10 eingezogen oder freigegeben wird.

Damit über den ganzen Umfang des Getriebegliedes 1 ein gleichmäßiger Abstand der die Laschen des Zugmittels verbindenden Bolzen und damit eine gleichmäßige Zahn- bzw. Lochteilung gegeben ist, muß zwischen dem Bolzen 20 des Zugmittelendes 11 und dem jeweils daran anschließenden Bolzen 21 des anderen Endes der wirksamen Umfanglänge des Zugmittels 10 ein der Laschenlänge entsprechender Abstand vorhanden sein. Diese Forderung bedingt, daß der Speicher 13 das Zugmittel nur in einer einem ganzzahligen Vielfachen der Laschenlänge und damit der Zahn- bzw. Lochteilung entsprechenden Länge freigegeben oder eingezogen werden darf. Daraus resultiert selbstverständlich eine stufenartige Veränderung des wirksamen Durchmessers des Getriebegliedes, wenn auch diese Stufen vergleichsweise klein sind. Um nun diese stufenweise Verstellung sicherzustellen, braucht lediglich die Hohlwelle 9 nur um ganzzahlige Vielfache eines Winkels verdreht zu werden, der auf Grund der gegebenen Übersetzungsverhältnisse einen entsprechenden Drehschritt des Speicherrades 14 bewirkt. Solche schrittweisen Drehverstellungen der Hohlwelle 9 gegenüber der An- bzw. Abtriebswelle 2 können mit bekannten technischen Mitteln einfach durchgeführt werden.

Zufolge des mit einer Zahn- bzw. Lochreihe versehenen Zugmittels 10, das auf dem den Umfang des Getriebegliedes 1 bildenden Stellkörper 5 abgestützt ist, kann zwischen dem Getriebeglied 1 und einem Übertragungselement entsprechender Ausbildung eine formschlüssige Verbindung hergestellt werden. Wegen der über den Speicher 13 veränderbaren Länge des Zugmittels 10 wird die Verstellbarkeit des Getriebegliedes hinsichtlich des wirksamen Durchmessers nicht beeinträchtigt, und es bleibt auch die Zahn- bzw. Lochteilung konstant, weil ja die Zahn- bzw. Lochreihe lediglich verlängert oder verkürzt wird.

Da es bei der Anordnung des für ein formschlüssiges Kammen mit einem Übertragungselement mit einer Zahn- bzw. Lochreihe versehenen Zugmittels 10 nur auf die Verstellbarkeit des Getriebegliedes hinsichtlich seines Durchmessers, nicht aber auf die Art seiner Verstellung ankommt, ergeben sich grundsätzlich auch keine Beschränkungen der Anwendung der Erfindung auf verschiedene Konstruktionen. Das Getriebeglied kann demnach auch bei Umschlingungsgetrieben oder Rädergetrieben Verwendung finden, je nach der Art des Übertragungselementes.

Wie Fig. 3 zeigt, kann der Umfang des Getriebegliedes 1 auch von zwei Zugmitteln 10a und 10b umschlossen werden, die auf einem gemeinsamen oder aber auch auf getrennten Speicherrädern aufgewickelt sind. Diese Ausbildung ist insbesondere dann von Vorteil, wenn die Stellkörper 5 nicht gemeinsam verschoben werden. Damit wird nämlich eine Verstellung im unbelasteten Zustand möglich. Selbstverständlich können auch zwei gleiche Zugmittel nebeineinander das Getriebeglied umschließen, was bei einer entsprechenden Versetzung zu einer halben Zahn- bzw. Lochteilung führt.

## Patentansprüche

1. Getriebeglied, bestehend aus einem Scheibenkörper (3), der mit Hilfe eines Stelltriebes gleichsinnig radial verstellbare Stellkörper (5) trägt, die außen von einem flexiblen Zugmittel (10) umschlossen sind, das eine Zahn- oder Lochreihe zum formschlüssigen Kammen mit einem Übertragungselement aufweist und mit einem Ende (11) an einem Stellkörper (5) verschiebefest angreift, während das andere Ende (12) durch eine Durchtrittsöffnung unmittelbar vor dem festgehaltenen Ende (11) zu einem von den Stellkörpern (5) umschlossenen Speicher (13) geführt ist, der aus einem gegenüber dem koaxialen Scheibenkörper (3) drehverstellbaren Speicherrad (14) besteht, an dem das Zugmittel (10) verschiebefest angreift, dadurch gekennzeichnet, daß der Speicher (13) mit dem Stelltrieb für die Stellkörper (5) in Antriebsverbindung steht.

2. Getriebeglied nach Anspruch 1, dadurch gekennzeichnet, daß zwei über den Umfang verteilte, an je einem Speicherrad (14) befestigte Zugmittel (10a,10b) vorgesehen sind.

## Revendications

1. Elément d'engrenage formé d'un organe en forme de disque (3) qui porte des organes de réglage (5) réglables radialement dans le même sens à l'aide d'une commande de réglage et qui sont entourés extérieurement par un organe de traction flexible (10) qui présente une série de dents ou de trous pour engrener rigidement avec un élément de transmission et s'applique par une extrémité (11) à un organe de réglage (5) sand pouvoir coulisser tandis que l'autre extrémité (12) arrive à travers une ouverture de passage, immédiatement devant l'extrémité maintenue fixe (11), à un accumulateur (13) entouré par les organes de réglage (5) et qui est formé d'une roue d'accumulateur (14) réglable en rotation relativement à l'organe coaxial en forme de disque (3) et à laquelle l'organe de traction (10) s'applique sans pouvoir coulisser, caractérisé par le fait que l'accumulateur (13) est en liaison d'entraînement avec la commande de réglage des organes de réglage (5).

2. Elément d'engrenage selon la revendication (1), caractérisé par le fait qu'il comporte deux organes de traction (10a, 10b) répartis sur la circonférence et fixés chacun à une roue d'accumulateur (14).

## Claims

1. A transmission member consisting of a disc member (3), which carries adjustable elements (5), which are radially adjustable in the same sense by means of an adjusting drive and are surrounded on the outside by a flexible tensile element (10), which has a series of teeth or holes (10) for positively meshing with a transmitting element and which at one end (11) non-displaceably engages an adjusting member (5) whereas the other end (12) extends through an opening disposed immediately in front of the retained end (11) to a storage device (13), which is surrounded by the adjustable elements (5) and consists of a storage wheel (14) that is rotationally adjustable relative to the coaxial disc member (3) and to which the tensile element (10) is non-displaceably connected, characterized in that the storage device (13) is operatively connected to the adjusting drive for the adjusting members (5).

2. A transmission member according to claim 1, characterized in that two tensile elements (10a, 10b) are provided, which are spaced around the periphery and secured to respective storage wheels (14).

FIG.1

# FIG. 2

# FIG. 3